# EUROPEAN PATENT APPLICATION

(11) **EP 1 956 582 A2**
(43) Date of publication of application: **13.08.2008**
(21) Application number: 08001931.8
(22) Date of filing: 01.02.2008
(51) Int. Cl.: G09G 3/36

(54) **Digital image displays**

(30) Priority: 08.02.2007 GB 0702440
(71) Applicant: Forth Dimension Displays Ltd., Daigety Bay Dunfermline, Fife KY11 9NB Scotland (GB)
(72) Inventor: Holmes, Paul, Fife KY11 9FH (GB); Cartwright, Nigel, 10437 Berlin (DE)
(74) Representative: Muttock, Neil John

(57) **Abstract**

A digital display includes a processor and memory, for displaying an image, the image having a range of brightness, the image being composed of a plurality of binary bit plane images displayed for varying amounts of time and in a sequence, the time and sequence of the bit plane images' display being determined by a sequence file stored in the memory. The sequence file can be overwritten by a further sequence file. Also, the sequence file can be uploaded to the digital display by a file uploader that monitors the connection and indicates when the connection has been broken and another digital display has been connected.

## Description

The present invention relates to digital image displays, and methods for driving them, particularly, but not exclusively, for Liquid Crystal Displays (LCDs).

In many liquid crystal displays, each pixel is capable of being in a white or black state. One method of displaying a grey scale image is to rapidly alternate the pixel between black and white. If this is done rapidly, the human eye perceives the pixel as being grey. To achieve different shades of grey, the ratio of time for which the pixel is on, to the time for which the pixel is off, is varied.

The brightness values of the pixels are usually specified as a binary number, which is converted into a series of bit planes representing each bit of the binary number. For example, each pixel may have a brightness specified on a scale of 0 to 255, so that the pixel can represented by eight bit planes, the most significant bit plane being displayed for 128 times the length of time of the least significant bit plane. For colour images, the primary colour components each have a brightness value that is separated into bit planes in this manner.

Each bit plane takes a finite time to load. For the least significant bit planes, which are displayed for the shortest times, this can be a limiting factor for the response speed of the display. It is an object of the present invention that the bit planes are uploaded in an efficient manner.

According to the present invention there is provided a digital display, including a processor and memory, for displaying an image. The image having a range of brightness and being composed of a plurality of binary bit plane images displayed for varying amounts of time and in a sequence, the time and sequence of the bit plane images' display being determined by a sequence file stored in the memory.

Preferably, a further sequence file may overwrite the previous sequence file.
Preferably the sequence file is uploaded to the digital display by a file uploader that monitors the connection and indicates when the connection has been broken and another digital display has been connected.

According to another aspect of the present invention, there is provided a method of installing a sequence like on a digital display comprising the steps of creating a sequence file, storing the sequence file, and uploading the sequence to a processor in the digital display.

Preferably the steps include simulating the effect of the sequence on the image produced by a digital display implementing that sequence file.

The invention allows the digital display to be very flexible and to be continually updated depending on the requirements of the digital display, the type of image it is to show, and to implement improvements. It also allows different and efficient methods of displaying images to be conveniently developed.

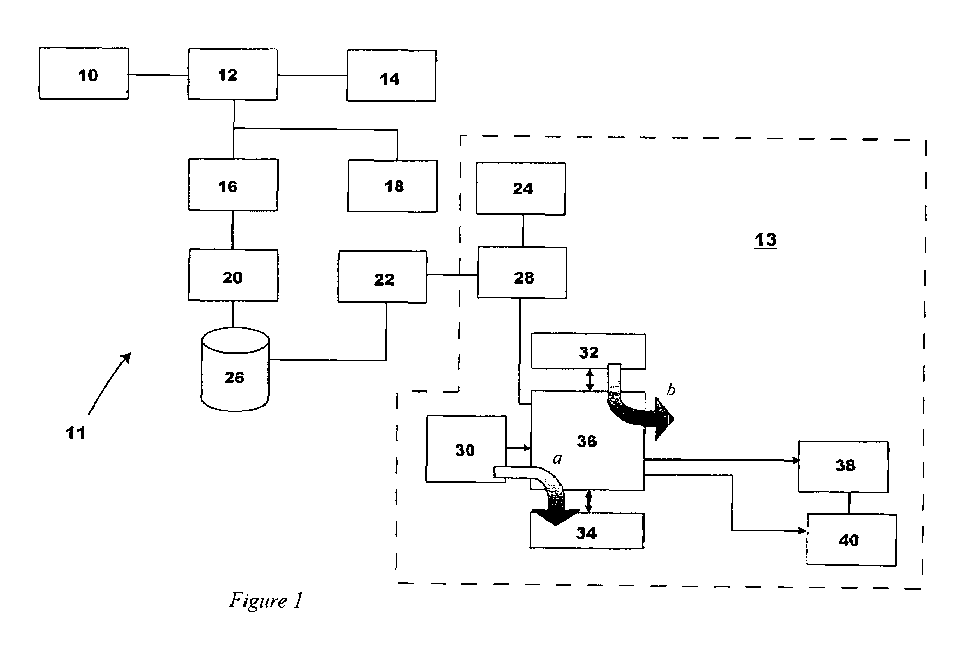

The invention will now be described, by way of example, and with reference to the accompanying drawing, which shows a schematic representation of the digital display.

The formatting and control circuitry for a digital display (together indicaled by 13) comprises a field programmable gate array (FPGA) 36, two frame stores 32, 34, a microprocessor 24 and a sequence file cache 24. The FGPA 36 controls a spatial light modulator (SLM) 38 and the illumination means of the display 40.

In operation, an image signal 30 is input into the FPGA 36. Typically, a single frame of the signal will comprise a colour image having 24 bits per pixel, the 24 bits representing the colour and the luminosity of the pixel - each primary colour (red, green and blue) is described by an 8 bit intensity value. The FPGA 36 converts this data into 8 single hit images or 'bit planes' for each primary colour. The red bit planes for example, arc conveniently denoted R7, R6 .... R1, R0, with the R7 bit plane is displayed for 128 time divisions in total, R6 for 64 time divisions, R5 for 32 and so on down to R0 being displayed for a single time division. The other two primary colours are treated in a similar fashion.

The FPGA 36 writes the bit planes for the picture to frame store 34, shown by arrow a. This process is continuous, and a previous picture has been formatted and stored in frame store 32. As the picture signal data is being converted into bit planes and written to frame store 34, individual bit planes from frame store 32 are output by the FPGA to the SLM 38, represented by arrow b. The FPGA also synchronises primary colour output of the illumination means 40 to create the picture.

The FPGA 36 takes a finite amount of time to read a bit plane from the frame store. This time may be greater than a single time division. The SLM 38 therefore includes two separate buffers which can each hold a bit plane, each buffer being able to upload to the pixel array faster than a single time division. A bit plane to be displayed for short time period (such as R0 which is displayed for a single time division) can be stored on one buffer while a frame to be displayed for a longer period (such as R7 which is displayed for 128 time divisions) is stored on the other buffer. The R0 bit plane can then be displayed between two periods of displaying the R7 bit plane. Another hit plane may then be loaded onto the buffer which held the R0 bit plane, Frames displayed for longer periods can be split up with short time period bit planes, so that there is always sufficient time to load a bit plane, in a number of sequences. A microprocessor 28 controls the FPGA's sequence and thus indirectly, the timing of the hit planes.

The sequence in which the bit planes arc displayed and interspersed is not only important for the efficient uploading of the image to the pixel array, but may affect the image in other ways. For example, the intensity of the light source may not be constant, or may vary between the primary colours. Altering the bit plane sequence so that particular bit planes are displayed during particular periods when the light source is varying, can improve the brightness and/or the colour characteristics of the display.

The order and timing of the bit planes for a single picture is determined by a sequence file 12. The sequence file specifies the time division when each new bit plane is to be displayed, and is written or edited using a text editor 10. Different sequence files may be stored in a repository 14, which preferably stores every modification of the sequence automatically, so that previous sequence files may be retrieved and altered.

Although loading a bit plane from the SLM's bit plane buffers is relatively fast, a longer time (greater than a single time division) is needed to load a bit plane from the frame store to a bit plane buffer. The sequence file therefore needs to allow sufficient time for a bit plane buffer to be loaded before its bit file can be displayed. A simulator 18 is used to check that no impermissible sequences arc present and alerts the programmer if this is the case. As mentioned, the sequence of bit planes can also affect the brightness and colour characteristics of the picture, and by calculating the characteristics of the light source during a particular time division, the simulator can give an indication to the programmer of the brightness and colour.

The sequence file is then compiled by compiler 16 into instructions 20 suitable for the control of the FPGA, and held in storage means 26.

To transfer the sequence file onto the formatting and control circuitry, a sequence file loader 22 reads the sequence file from the storage means 26. The sequence file loader 22 is then connected to the display control's microprocessor 28, and the sequence file is loaded onto the display control and stored in the sequence file cache 24. The sequence file loader monitors the connection with the microprocessor 28; in the event of the microprocessor being disconnected, the sequence file loader indicates this and monitors the connection for a new microprocessor. The sequence file loader could be configured to interrogate the microprocessor and indicate what sequence file was currently stored in the sequence file cache when a new connection is made. This ensures that when a second digital display is connected to the sequence file loader, a user does not mistakenly assume that the sequence file has already been uploaded. The sequence file configuration apparatus 11 needed to create and upload the sequence file is generally separate to the digital display and its formatting and control circuitry; it only needs to be connected to the digital display when a sequence file is to be uploaded.

The sequence file may contain further data besides the order and timing of the bit planes. The sequence file could for example include the clock speed that the sequence is to run at. The sequence file could include metadata such as descriptive data, version numbers, timestamps and/or certificates. Where the SLM is illuminated by light from a colour wheel, the sequence file may include the colour wheel speed. Where LEDs are used to illuminate the liquid crystal display, the sequence may control the LED's brightnesses and Limings. Although a display system with three primaries has been described, it will be appreciated that the system is also applicable to monochrome, two colour or multiprimary (i.e. more than three primaries) displays that use bit planes, Further, particularly where LEDs are used, each colour need not be displayed in turn but different colour bit planes may he interspersed during the generation of a single picture.

Any SLM that can be used with bit planes may be used, for example, a liquid crystal cell array or a micromirror display.

Although a strictly binary weighting scheme has been described, the present invention allows the flexibility to alter the weightings to compensate for other effects such as delays in SLM switching, or changing illumination.

## Claims

1. A digital display including a processor and memory, for displaying an image, the image having a range of brightness, the image being composed of a plurality of binary bit plane images displayed for varying amounts of time and in a sequence, the time and sequence of the bit plane images' display being determined by a sequence file stored in the memory.

2. A digital display according to claim 1, wherein the sequence file may he overwritten by a further sequence file.

3. A digital display according to any previous claim, wherein the sequence file is uploaded to the digital display by a lile uploader that monitors the connection and indicates when the connection has been broken and another digital display has been connected.

4. A method of installing a sequence file on a digital display comprising the steps of creating a sequence File, storing the sequence lile, uploading the sequence to a processor in the digital display.

5. A method according to claim 4 wherein the steps include simulating the effect of the sequence on the image produced by a digital display implementing that sequence file.

6. A method according to claim 4 wherein the steps include compiling the sequence from an editable form into a binary form.

7. A method according to claim 4 wherein the sequence file contains metadata.
